# FASCICULE DE BREVET EUROPEEN

(11) **EP 3 290 335 B1**
(45) Date de publication et mention de la délivrance du brevet: **02.01.2019**
(21) Numéro de dépôt: 17186536.3
(22) Date de dépôt: 17.08.2017
(51) Int. Cl.: B64C 27/605

(54) **AÉRONEF MUNI D'UN ENSEMBLE DE PLATEAUX CYCLIQUES ET D'AU MOINS UNE SERVOCOMMANDE INCLINÉE**
LUFTFAHRZEUG, DAS MIT EINER TAUMELSCHEIBENANORDNUNG UND MINDESTENS EINEM GENEIGTEN SERVOANTRIEB AUSGESTATTET IST
AN AIRCRAFT PROVIDED WITH A SWASHPLATE ARRANGEMENT AND WITH AT LEAST ONE SERVO-CONTROL THAT IS INCLINED

(30) Priorité: 31.08.2016 FR 1601282
(43) Date de publication de la demande: 07.03.2018
(73) Titulaire: Airbus Helicopters, 13725 Marignane Cedex (FR)
(72) Inventeur: STRUZIK, Alain, 13100 Aix en Provence (FR)
(74) Mandataire: GPI & Associés

(56) Documents cités:
- EP-B1- 1 954 559
- WO-A2-2009/153236
- FR-A1- 2 579 170

## Description

La présente invention concerne un aéronef qui est muni d'un ensemble de plateaux cycliques et d'au moins une servocommande inclinée.

En particulier, l'aéronef est muni d'une voilure tournante. Cette voilure tournante comporte un rotor principal participant à la sustentation voire à la propulsion de l'aéronef. Classiquement, un tel rotor principal comporte un mât rotor qui met en rotation une pluralité de pales, éventuellement via un moyeu rotor.

Afin de contrôler le déplacement de l'aéronef, le pas des pales du rotor principal est piloté.

La variation cyclique du pas des pales d'un rotor permet de faire varier le pas de chaque pale en fonction de son azimut. La variation collective du pas des pales d'un rotor induit par contre une variation identique du pas des pales de ce rotor.

Par exemple, un rotor principal d'hélicoptère permet d'assurer à la fois :
- la variation cyclique du pas des pales de ce rotor principal afin de faire varier l'angle de pas en fonction de l'azimut des pales,
- la variation collective du pas de toutes les pales de ce rotor principal.

Dès lors, le pas des pales d'un rotor peut être ajustable à l'aide de bielles de pas et d'un ensemble de plateaux cycliques agencé autour du mât rotor.

L'ensemble de plateaux cycliques est pourvu en principe d'un plateau tournant lié aux bielles de pas, et d'un plateau non tournant lié aux commandes de vol.

Le plateau non tournant est situé sous le plateau tournant, ou est entouré par ce plateau tournant. De plus, le plateau non tournant est lié au plateau tournant pour imprimer ses mouvements au plateau tournant. Ainsi, le plateau tournant suit tous les mouvements du plateau non tournant et transmet ces mouvements aux pales via les bielles de pas.

Par suite, le plateau non tournant et le plateau tournant sont à même d'être translatés le long du mât rotor mais aussi d'être inclinés par rapport à ce mât rotor. La translation et l'inclinaison du plateau non tournant et du plateau tournant peuvent être réalisées à l'aide d'un dispositif qui comprend une rotule de mât centrée sur l'axe de rotation du rotor et qui coulisse par exemple le long d'un élément structural. Cet élément structural est par exemple fixe dans le référentiel de l'aéronef et constitue un guide local autour du mât rotor.

Le plateau non tournant est alors agencé de manière oscillante sur la rotule de mât de manière à pouvoir être incliné et translaté par rapport au mât rotor.

Le plateau tournant de l'ensemble de plateaux cycliques est alors lié au plateau non tournant par un organe de liaison permettant :
- au plateau tournant d'être solidaire du plateau non tournant en translation le long du mât du rotor,
- au plateau tournant d'osciller autour de la rotule de mât conjointement avec le plateau non tournant, et
- au plateau tournant d'effectuer une rotation autour de l'axe de rotation du rotor conjointement avec les pales.

Pour déplacer l'ensemble de plateaux cycliques en translation le long du mât rotor et/ou en rotation autour de la rotule de mât, l'aéronef comporte au moins trois servocommandes articulées au plateau tournant.

Lorsque toutes les servocommandes s'étendent ou se rétractent de la même manière, l'ensemble de plateaux cycliques se déplace en translation pour modifier collectivement le pas des pales du rotor. Par contre, lorsqu'au moins une servocommande est sollicitée différemment des autres servocommandes, l'ensemble de plateaux cycliques s'incline pour modifier le pas cyclique des pales du rotor.

Les servocommandes s'étendent en élévation d'une articulation inférieure fixée à une attache basse immobile dans le référentiel de l'aéronef, vers une articulation supérieure fixée à une attache haute du plateau non tournant. L'articulation inférieure et l'articulation supérieure d'une servocommande sont dans le même azimut au regard de l'axe de rotation du rotor.

Eventuellement, l'articulation inférieure et l'articulation supérieure d'une servocommande sont séparées radialement de l'axe de rotation respectivement par des rayons inférieur et supérieur qui diffèrent. Les servocommandes sont sensiblement contenues dans un cône.

Par ailleurs, le plateau tournant est entrainé en rotation par le mât rotor au travers d'au moins un compas tournant. A cet effet, le plateau tournant est attaché à au moins un compas tournant relié au mât rotor, éventuellement par le moyeu du rotor principal. Le mât rotor entraîne alors directement ou indirectement en rotation le plateau tournant autour de l'axe de rotation.

A l'inverse, le plateau non tournant est fixé à la structure du giravion, éventuellement à une boîte de transmission de puissance, à l'aide d'au moins un compas fixe qui tend à l'empêcher de tourner autour de l'axe de rotation du rotor.

Un compas, tournant ou non tournant, peut comporter deux branches articulées entre elles. Plus précisément, un compas peut comporter une branche supérieure et une branche inférieure articulées entre elles par une articulation centrale. L'articulation centrale permet aux deux branches d'un compas de s'écarter ou de s'approcher l'une de l'autre pour autoriser le déplacement en translation ou en rotation du plateau relié au compas.

Le compas non tournant est alors muni d'une branche supérieure articulée au plateau non tournant via une articulation haute parfois de type rotule. De plus, le compas non tournant est muni d'une branche inférieure articulée par exemple à un carter d'une boîte de transmission de puissance via une articulation basse.

L'articulation basse et l'articulation centrale sont parfois des articulations à pivot présentant chacune un jeu axial pouvant atteindre un millimètre. Le jeu axial total du compas non tournant peut, par voie de conséquence, atteindre deux millimètres.

Lorsque le compas tournant est sujet à deux types de couples, ce jeu axial total confère au plateau non tournant un degré de liberté limité en rotation autour de l'axe de rotation du rotor. Le plateau non tournant est classiquement considéré comme étant immobile en rotation autour de l'axe de rotation du rotor, aux jeux axiaux du compas non tournant près.

En particulier, le compas non tournant subit un premier couple induit par le frottement d'un dispositif de roulement situé entre le plateau tournant et le plateau non tournant. Ce frottement tend à engendrer un début de rotation du plateau non tournant. La rotation du plateau non tournant est arrêtée justement par le compas non tournant lorsque le jeu axial total est comblé. Dans le cadre d'un dispositif de roulement à billes, le couple résultant du frottement du dispositif de roulement est dû au frottement des billes sur leurs pistes. Le couple résultant du frottement du dispositif de roulement est toujours dirigé selon le sens de rotation du mât rotor, mais sa valeur varie dans le temps.

Le compas non tournant subit de plus un deuxième couple induit par les servocommandes lorsque l'ensemble de plateaux cycliques est basculé. Les efforts introduits par les servocommandes pour basculer l'ensemble de plateaux cycliques ont en effet des composantes tangentielles tendant à déplacer en rotation le plateau non tournant. Ces composantes tangentielles sont à l'origine de ce deuxième couple exercé sur le compas non tournant.

L'intensité de chacun de ces deux couples varie au cours de chaque tour lors de la rotation du rotor en fonction de la manoeuvre réalisée par l'aéronef, de la masse et du centrage de l'aéronef ainsi que de certains paramètres d'environnement tels que l'altitude et la température extérieure par exemple.

En particulier, le deuxième couple induit par les servocommandes peut changer de signe plusieurs fois au cours d'un tour effectué par un rotor, par exemple en prenant une valeur allant de -50 à + 200 Nm (Newton mètre). Le changement de signe du deuxième couple induit par les servocommandes peut provoquer de la sorte des chocs axiaux subis par le compas non tournant.

Le compas non tournant subit des chocs lorsque le deuxième couple induit par les servocommandes change de signe au cours d'un tour effectué par le rotor, et, lorsque concomitamment le premier couple résultant du frottement du dispositif de roulement est inférieur au deuxième couple induit par les servocommandes au cours d'un tour effectué par le rotor.

Une telle situation peut notamment se produire en vol de descente de l'aéronef ou encore durant un vol en palier au cours d'un virage effectué à forte vitesse.

Ces chocs se traduisent par des pics d'efforts très importants exercés dans les articulations du compas non tournant, par exemple des efforts compris entre -500 et +1000 N (Newton).

Bien que résistantes, lesdites articulations d'un compas et notamment du compas non tournant subissent dans ces conditions une usure qui implique des actions de maintenance onéreuses et récurrentes.

Pour y remédier, les compas sont souvent surdimensionnés, et sont donc finalement lourds et coûteux à fabriquer.

Les documents EP1954559, FR2951699 et FR2768996 décrivent divers ensembles de plateaux cycliques.

Les documents Fr 2579170 et WO 2009/153236 sont aussi connus.

La présente invention a alors pour objet de proposer un aéronef tendant à optimiser les couples subis par le compas non tournant, pour éventuellement envisager l'utilisation d'un compas non tournant moins onéreux.

Selon l'invention, un aéronef est muni d'un rotor, le rotor étant muni d'un ensemble de plateaux cycliques et de pales, l'ensemble de plateaux cycliques comprenant un plateau tournant relié auxdites pales par des bielles de pas, l'ensemble de plateaux cycliques comprenant un plateau non tournant, le plateau tournant étant mobile en rotation autour d'un axe de rotation du rotor, un compas inférieur étant articulé au plateau non tournant et étant articulé à un organe immobile en rotation autour de l'axe de rotation et dans le référentiel de l'aéronef, le rotor comprenant une pluralité de servocommandes, chaque servocommande étant munie d'une articulation dite « articulation supérieure » articulée à une attache supérieure du plateau non tournant et d'une articulation dite « articulation inférieure » articulée à une attache inférieure immobile dans le référentiel de l'aéronef.

Un dispositif de roulement peut être interposé entre le plateau tournant et le plateau non tournant pour favoriser la rotation du plateau tournant autour de l'axe de rotation du rotor par rapport au plateau non tournant.

Dès lors, pour au moins une dite servocommande dénommée « servocommande inclinée » par commodité, ladite articulation inférieure de la servocommande inclinée est décalée en azimut autour de l'axe de rotation par rapport à ladite articulation supérieure de cette servocommande inclinée.

Au moins une servocommande est donc une servocommande inclinée. Eventuellement plusieurs voire toutes les servocommandes sont des servocommandes inclinées.

L'expression « décalée en azimut » signifie que l'articulation supérieure et l'articulation inférieure ne présentent pas le même angle d'azimut par rapport à un plan de référence passant par l'axe de rotation du rotor. Une servocommande inclinée ne s'étend alors pas de l'articulation inférieure à l'articulation supérieure dans un plan de symétrie contenant l'axe de rotation du rotor.

En effet, l'articulation supérieure autorise un mouvement entre la servocommande et le plateau non tournant autour d'un centre dit « centre d'articulation supérieure » par commodité. L'articulation supérieure peut à cet effet prendre la forme d'une articulation à rotule.

De même, l'articulation inférieure autorise un mouvement entre la servocommande et l'organe immobile autour d'un centre dit « centre d'articulation inférieure » par commodité. L'articulation inférieure peut à cet effet prendre la forme d'une articulation à rotule.

Par suite, en raison du décalage en azimut, le centre d'articulation inférieure et le centre d'articulation supérieure sont respectivement contenus dans deux plans en élévation distincts contenant ledit axe de rotation du rotor.

A l'inverse, les rotors antérieurs à l'invention présentent des servocommandes dépourvues de décalage en azimut.

L'invention introduit donc sur au moins une servocommande dite « servocommande inclinée » un léger décalage angulaire en azimut entre l'articulation inférieure et l'articulation supérieure. Le décalage en azimut peut tendre à générer un couple supplémentaire sur le compas inférieur qui imposera toujours le même signe au couple généré par les servocommandes sur le compas inférieur. Par conséquent, le plateau non tournant ne génère pas des chocs dans le compas inférieur.

Cet aéronef présente alors l'avantage de tendre à réduire significativement les efforts exercés sur le compas inférieur, et donc à limiter l'usure du compas inférieur. Par suite, le compas inférieur peut éventuellement être optimisé de manière à présenter une masse réduite et à engendrer des coûts de fabrication et/ou de maintenance réduits.

A titre illustratif, un décalage tangentiel de quelques millimètres d'une des articulations supérieure et inférieure d'une servocommande inclinée, par rapport à une position non décalée en azimut, induit un décalage en azimut de quelques degrés entre ces articulations supérieure et inférieure. Par exemple, un décalage tangentiel compris entre 10 et 20 millimètres pour une servocommande ayant une longueur de l'ordre de 800 millimètres peut induire un décalage en azimut de 1 à 2 degrés.

Ce décalage angulaire en azimut peut être optimisé par simulations et/ou tests. Par exemple, le décalage en azimut requis peut être évalué pour être suffisant afin de s'assurer que le deuxième couple induit par les servocommandes soit toujours du même signe dans les phases les plus critiques de vol. De plus, le décalage en azimut requis peut être limité pour ne pas augmenter plus que nécessaire le couple induit par les servocommandes et pour optimiser le débattement angulaire des rotules des servocommandes.

L'aéronef peut de plus comporter une ou plusieurs des caractéristiques qui suivent.

Pour au moins une dite servocommande inclinée, un centre d'articulation inférieure de l'articulation inférieure de cette servocommande inclinée peut être décalé en azimut par rapport à un centre d'articulation supérieure de l'articulation supérieure de cette servocommande inclinée.

Par exemple, au moins une desdites articulation inférieure et articulation supérieure est une articulation à rotule. Une telle articulation à rotule procure une liberté de mouvement en rotation selon trois axes concourant au niveau d'un centre d'articulation de cette articulation à rotule.

Pour au moins une dite servocommande inclinée, un plan de référence contenant l'axe de rotation du rotor et un centre d'articulation inférieure de l'articulation inférieure, un plan supérieur étant orthogonal à cet axe de rotation et contenant un centre d'articulation supérieure de l'articulation supérieure de cette servocommande inclinée, un angle dit « angle supérieur » non nul peut séparer circonférentiellement et autour de l'axe de rotation dans le plan supérieur le centre d'articulation supérieur de l'articulation supérieure et le plan de référence.

L'articulation inférieure présente de fait un angle d'azimut nul par rapport au plan de référence. Par contre, l'articulation supérieure présente un angle d'azimut non nul par rapport au plan de référence, cet angle étant dénommé par commodité « angle supérieur ».

Eventuellement, le rotor effectuant un mouvement rotatif selon un sens de rotation donné autour de l'axe de rotation, le centre d'articulation supérieure s'éloigne du plan de référence selon ledit sens de rotation.

Le décalage en azimut des articulations d'une servocommande inclinée est effectué de manière privilégiée selon cette variante dans le sens de rotation du rotor, pour créer un couple qui s'additionne au couple généré par les efforts de frottement du roulement.

Toutefois, un décalage en azimut dans un sens contraire au sens de rotation est envisageable.

Eventuellement, le rotor comprenant au moins trois servocommandes, les trois servocommandes comprenant une servocommande latérale gauche tendant à faire basculer ledit ensemble de plateaux cycliques vers un flanc gauche dudit aéronef, lesdits trois servocommandes comprenant une servocommande latérale droite tendant à faire basculer ledit ensemble de plateaux cycliques vers un flanc droit dudit aéronef, lesdits trois servocommandes comprenant une servocommande avant tendant à faire basculer ledit ensemble de plateaux cycliques vers une extrémité avant dudit aéronef, au moins ladite servocommande avant est une servocommande inclinée, chaque servocommande qui n'est pas une servocommande inclinée ayant une articulation inférieure qui n'est pas décalée en azimut par rapport à une articulation supérieure de cette servocommande.

La servocommande latérale gauche, la servocommande latérale droite et la servocommande avant sont courantes sur un rotor de giravion, et notamment un rotor principal d'un hélicoptère. Eventuellement, le rotor peut aussi comprendre une servocommande dite « servocommande arrière » tendant à faire basculer ledit ensemble de plateaux cycliques vers une extrémité arrière de l'aéronef.

Favorablement, au moins la servocommande qui pilote le basculement de l'ensemble de plateaux cycliques en vol d'avancement dite « servocommande avant » est une servocommande inclinée.

Selon un autre aspect, au moins une dite attache inférieure ou une dite attache supérieure d'une servocommande inclinée comprend une chape, cette chape présentant au moins une plaque plane traversée par une broche, la plaque plane est parallèle à une droite contenant le centre d'articulation inférieure et le centre d'articulation supérieure de cette servocommande inclinée.

Si nécessaire, certaines chapes peuvent être inclinées pour permettre le débattement angulaire des rotules des servocommandes sans interférence.

Outre un aéronef, l'invention vise un procédé d'optimisation d'un aéronef ayant une voilure tournante munie d'un rotor, ledit rotor étant muni d'un ensemble de plateaux cycliques et de pales, l'ensemble de plateaux cycliques comprenant un plateau tournant relié auxdites pales par des bielles de pas, l'ensemble de plateaux cycliques comprenant un plateau non tournant, ledit plateau tournant étant mobile en rotation autour d'un axe de rotation du rotor, un compas inférieur étant articulé au plateau non tournant et étant articulé à un organe immobile en rotation autour de l'axe de rotation dans un référentiel de l'aéronef, ledit rotor comprenant une pluralité de servocommandes, chaque servocommande étant munie d'une articulation supérieure articulée à une attache supérieure du plateau non tournant et d'une articulation inférieure articulée à une attache inférieure immobile dans un référentiel de l'aéronef.

Pour au moins une dite servocommande dite « servocommande inclinée », le procédé comporte une étape de :
- décalage en azimut de ladite articulation supérieure autour de l'axe de rotation par rapport à ladite articulation inférieure.

Eventuellement, le rotor effectuant un mouvement rotatif selon un sens de rotation donné autour de l'axe de rotation, le rotor possédant une servocommande positionnée avant l'application du procédé dans une position médiane virtuelle où l'articulation inférieure n'est pas décalée en azimut autour de l'axe de rotation par rapport à l'articulation supérieure, l'étape de décalage en azimut comporte une sous-étape de décalage en azimut selon ledit sens de rotation de l'articulation supérieure par rapport à ladite position médiane.

Eventuellement, le rotor effectuant un mouvement rotatif selon un sens de rotation donné autour de l'axe de rotation, le rotor possédant une servocommande positionnée avant l'application du procédé dans une position médiane virtuelle où l'articulation inférieure n'est pas décalée en azimut autour de l'axe de rotation par rapport à l'articulation supérieure, ladite étape de décalage en azimut comporte une sous-étape de décalage en azimut selon un sens opposé audit sens de rotation de l'articulation inférieure par rapport à ladite position médiane.

Le procédé peut être appliqué sur un aéronef existant. Dès lors, l'articulation supérieure d'une servocommande inclinée et l'attache supérieure associée peuvent être décalées selon le sens de rotation du rotor, et/ou l'articulation inférieure d'une servocommande inclinée et l'attache inférieure associée peuvent être décalées selon le sens contraire au sens de rotation du rotor

Plusieurs attaches et articulations éventuellement de plusieurs servocommandes peuvent être décalées afin de réduire le décalage angulaire qui aurait été nécessaire si seulement une attache était décalée. Cette caractéristique peut permettre de limiter l'inclinaison des servocommandes inclinées, afin d'optimiser leurs débattements.

L'invention et ses avantages apparaîtront avec plus de détails dans le cadre de la description qui suit avec des exemples donnés à titre illustratif en référence aux figures annexées qui représentent :
- la figure 1, une vue schématique d'un aéronef selon l'invention,
- la figure 2, une vue en trois dimensions d'un rotor selon l'invention,
- la figure 3, un schéma illustrant le décalage en azimut d'une articulation inférieure et d'une articulation supérieure d'une servocommande inclinée, et
- les figures 4 à 7, des figures illustrant l'intérêt de l'invention, les figures 4 et 5 illustrant respectivement le couple induit par les servocommandes sur un compas inférieur et les efforts exercés sur le compas inférieur dans un rotor pourvu de servocommandes non inclinées, les figures 6 et 7 illustrant respectivement le couple induit par les servocommandes sur un compas inférieur et les efforts exercés sur le compas inférieur dans un rotor pourvu d'au moins une servocommande inclinée.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

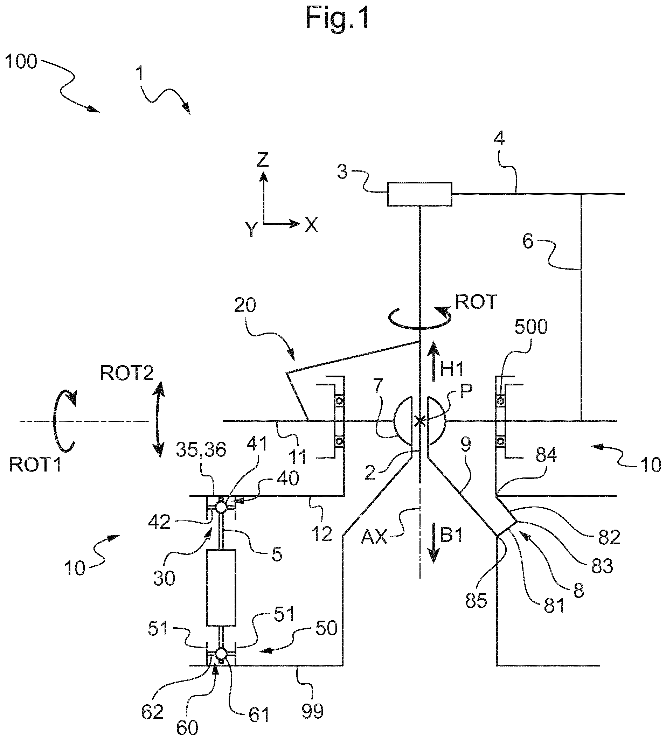

La figure 1 présente une vue schématique d'un aéronef 100 selon l'invention. Cet aéronef 100 est muni d'un rotor 1. Par exemple, le rotor 1 est un rotor d'une voilure tournante et participe au moins partiellement à la propulsion et/ou à la sustentation de l'aéronef 100. Les autres organes de l'aéronef ne sont pas représentés pour ne pas alourdir la figure 1.

L'aéronef 100 peut donc être un giravion, et notamment un hélicoptère par exemple.

Le rotor 1 est muni d'un mât rotor 2 s'étendant en élévation le long d'un axe de rotation AX. Une installation motrice entraîne en rotation le mât rotor autour de l'axe de rotation AX.

Le mât rotor 2 est solidaire en rotation autour de l'axe de rotation AX d'une pluralité de pales 4. Par exemple, le mât rotor 2 est fixé à un moyeu 3. Ce moyeu 3 porte et entraîne en rotation une pluralité de pales 4.

Ce rotor 1 est de plus pourvu d'un ensemble de plateaux cycliques 10 qui est relié à des commandes de vol par des servocommandes 5.

Plus précisément, l'ensemble de plateaux cycliques 10 comporte un premier plateau dit « plateau non tournant 12 » agencé sur une rotule de mât 7. La rotule de mât 7 est disposée de manière coulissante sur un élément fixe 9 de la structure de l'aéronef. De plus, le plateau non tournant 12 est lié par un compas inférieur 8 à un organe 99 immobile dans le référentiel de l'aéronef. Un tel organe 99 peut être un élément d'un carter d'une boîte de transmission de puissance par exemple. De plus, l'organe immobile 99 peut être confondu avec l'élément fixe 9.

Le compas inférieur 8 a pour fonction de retenir le plateau non tournant 12 contre toute rotation autour de l'axe de rotation AX, aux jeux de fabrication du compas inférieur 8 prêts.

Le compas inférieur 8 peut comprendre une branche supérieure 82, par exemple en forme de delta, qui est articulée au plateau non tournant 12 via une rotule 84.

De plus, le compas inférieur 8 peut comprendre une branche inférieure 81, par exemple en forme de H. Cette branche inférieure 81 est articulée à l'organe 99 via une articulation basse 85. Cette articulation basse 85 comprend un pivot s'articulant autour d'un axe à une chape femelle de la branche inférieure et à une chape mâle de l'organe 99. Cette articulation basse 85 présente un jeu axial pouvant par exemple atteindre un millimètre.

De même, la branche inférieure 81 est articulée à la branche supérieure 82 via une articulation centrale 83. Cette articulation centrale 83 présente un pivot s'articulant autour d'un axe à une chape femelle de la branche inférieure 81 et à une chape mâle de la branche supérieure 82. Cette articulation centrale 83 présente un jeu axial pouvant par exemple atteindre un millimètre.

En outre, l'ensemble de plateaux cycliques 10 comporte un deuxième plateau dit « plateau tournant 11 » qui coopère avec le plateau non tournant 12 par un système de fixation 500. Par exemple, le plateau tournant 11 porte plateau non tournant 12 via le système de fixation 500. Ce système de fixation 500 permet uniquement au plateau tournant 11 d'effecteur un mouvement rotatif autour de l'axe de rotation AX, par rapport au plateau non tournant 12. Un tel système de fixation 500 peut comprendre un système de roulement à billes ou à rouleaux par exemple.

Par ailleurs, l'ensemble de plateaux cycliques 10 possède un moyen d'entraînement 20 liant en rotation le plateau tournant 11 et le mât rotor 2, tel qu'un compas supérieur à deux branches par exemple. Le moyen d'entraînement 20 induit l'entraînement du plateau tournant par le mât rotor 2 autour de l'axe de rotation AX.

Le plateau tournant 11 et le plateau non tournant 12 sont par exemple concentriques. Le plateau non tournant 12 est éventuellement agencé au sein d'un logement circulaire du plateau tournant.

On se rapportera à la littérature pour obtenir plus d'informations quant à l'agencement et au fonctionnement du plateau non tournant 12 et du plateau tournant 11 d'un ensemble de plateaux cycliques 10. On peut aussi se rapporter au document FR2848524 qui décrit une liaison entre le plateau tournant et le plateau non tournant.

Dès lors, le plateau non tournant 12 est relié aux commandes de vol par des servocommandes 5, alors que le plateau tournant 11 est relié à chaque pale par une bielle de pas 6.

Lorsque les commandes de pas requièrent une augmentation collective du pas des pales 4, les servocommandes s'étendent de manière identique afin de translater conjointement le plateau non tournant 12 et le plateau tournant 11 le long de l'axe de rotation AX selon la flèche H1. Lorsque les commandes de pas requièrent une diminution collective du pas des pales 4, les servocommandes se rétractent de manière identique afin de translater conjointement le plateau non tournant 12 et le plateau tournant 11 le long de l'axe de rotation AX selon la flèche B1

Par contre, si les commandes de pas requièrent une variation cyclique du pas des pales 4, au moins une servocommande 5 s'étend ou se rétracte de manière différente des autres servocommandes. Le plateau non tournant 12 et le plateau tournant 11 s'inclinent alors conjointement par rapport à un point P correspondant au centre de la rotule de mât 7. En particulier, le plateau non tournant 12 et le plateau tournant 11 peuvent effectuer deux rotations ROT1, ROT2 selon deux axes orthogonaux entre eux.

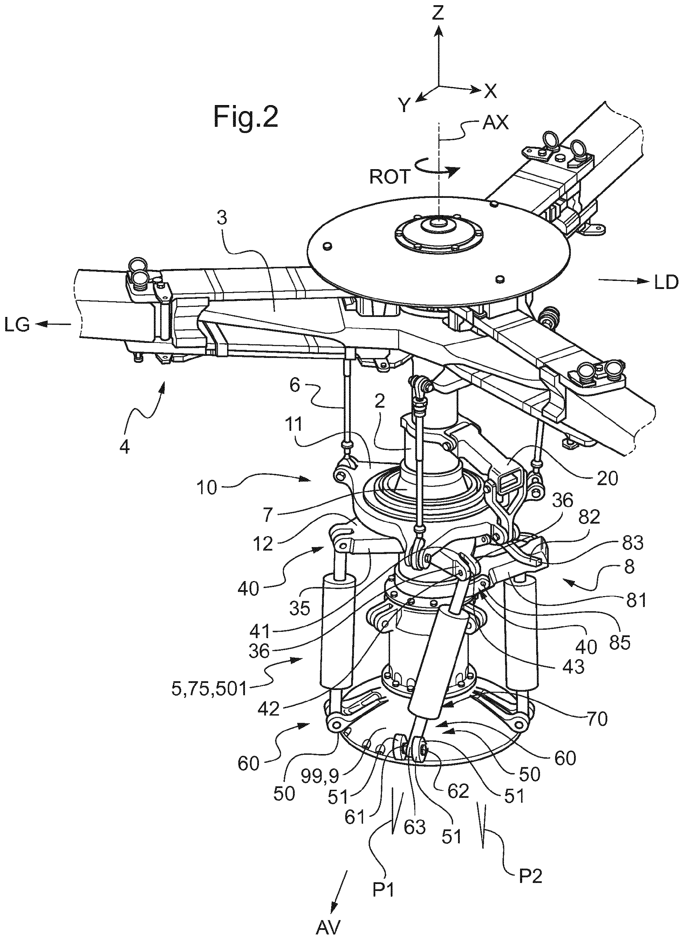

En référence à la figure 2, chaque servocommande 5 est munie d'une articulation supérieure 40 qui est articulée à une attache supérieure 35 du plateau non tournant 12. L'articulation supérieure 40 peut comprendre une rotule 41 qui est agencée dans une cage fixée à la servocommande. De plus, l'articulation supérieure 40 peut comporter une broche 42 qui traverse la rotule 41 et au moins une plaque 36 d'une chape de l'attache supérieure 35.

Chaque servocommande 5 présente alors des degrés de liberté en rotation par rapport à un centre d'articulation supérieure 43 de l'articulation supérieure 40.

De plus, chaque servocommande 5 est munie d'une articulation inférieure 60 qui articulée à une attache inférieure 50 immobile dans un référentiel de l'aéronef 100. Une telle attache inférieure 50 peut être fixée à l'organe 99 par exemple. L'articulation inférieure 60 peut comprendre une rotule 61 qui est agencée dans une cage fixée à la servocommande. De plus, l'articulation inférieure 60 peut comporter une broche 62 qui traverse la rotule 61 et au moins une plaque 51 d'une chape de l'attache inférieure 60.

Chaque servocommande 5 présente alors des degrés de liberté en rotation par rapport à un centre d'articulation inférieure 63 de l'articulation inférieure 60.

Selon un autre aspect, au moins une servocommande 5 est une servocommande dénommée « servocommande inclinée 70 ». Une servocommande inclinée 70 comporte une articulation inférieure 60 qui est décalée en azimut autour de l'axe de rotation AX par rapport à l'articulation supérieure 40 de cette servocommande inclinée 70.

Par exemple, le centre d'articulation inférieure 63 de l'articulation inférieure 60 est décalé en azimut par rapport à un centre d'articulation supérieure 43 de l'articulation supérieure 40.

Dès lors, le centre d'articulation inférieure 63 est localisé dans un premier plan en élévation P1 contenant l'axe de rotation AX. Par contre, le centre d'articulation supérieure 43 est localisé dans un deuxième plan en élévation P2 contenant l'axe de rotation AX, le deuxième plan en élévation P2 étant distinct du premier plan P1.

En particulier, le rotor 1 peut comprendre au moins trois servocommandes 5 incluant :
- une servocommande latérale gauche 501 notamment destinée à faire basculer ledit ensemble de plateaux cycliques 10 vers un flanc gauche LG de l'aéronef 100,
- une servocommande latérale droite masquée sur la figure 2 notamment destinée à faire basculer l'ensemble de plateaux cycliques 10 vers un flanc droit LD de l'aéronef 100,
- une servocommande avant 502 notamment destinée à faire basculer l'ensemble de plateaux cycliques 10 vers une extrémité avant AV de l'aéronef 100.

Eventuellement, une servocommande arrière peut être notamment destinée à faire basculer l'ensemble de plateaux cycliques 10 vers une extrémité arrière de l'aéronef 100.

Dès lors, au moins la servocommande avant 502 peut éventuellement être une servocommande inclinée 70.

Toutes les servocommandes 5 peuvent être des servocommandes inclinées.

Toutefois, au moins une servocommande 5 peut être une servocommande dite « servocommande non inclinée 75 ». Une telle servocommande non inclinée 75 présente une articulation inférieure qui n'est pas décalée en azimut par rapport à une articulation supérieure de cette servocommande.

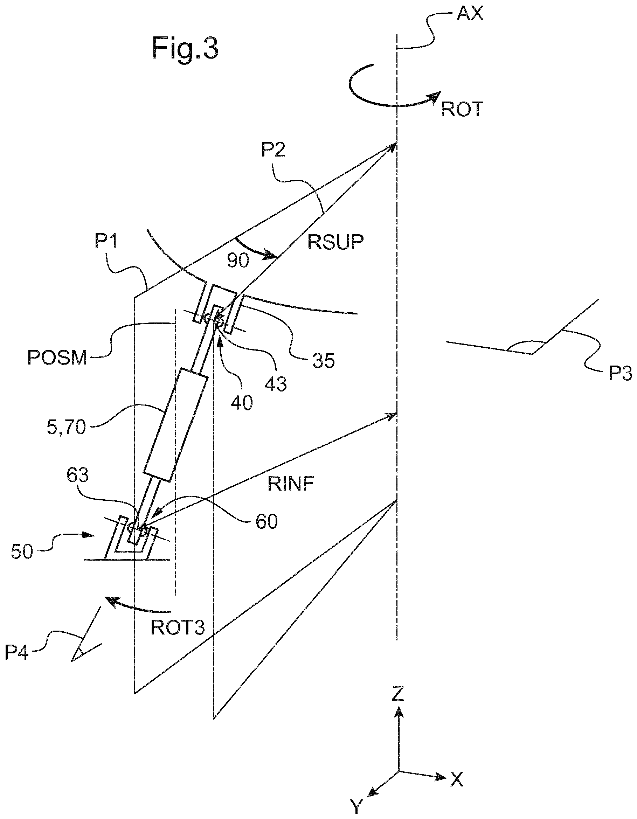

En référence à la figure 3, pour une servocommande inclinée 70, le centre d'articulation inférieure 63 de l'articulation inférieure 60 peut être localisé dans un plan de référence P1 contenant l'axe de rotation AX.

Le centre d'articulation supérieure 43 de l'articulation supérieure 40 est de plus localisé dans un plan supérieur P3 qui est orthogonal à l'axe de rotation AX.

Dès lors, un angle supérieur non nul 90 sépare circonférentiellement et autour de l'axe de rotation AX, dans le plan supérieur P3, le centre d'articulation supérieure 40 et le plan de référence P1.

Eventuellement, le rotor 1 effectuant un mouvement rotatif selon un sens de rotation ROT autour de l'axe de rotation AX, le centre d'articulation supérieure 43 peut s'éloigner du plan de référence P1 selon le sens de rotation ROT.

Selon un autre aspect, l'attache inférieure 50 et/ou l'attache supérieure 35 d'une servocommande inclinée 70 comprend une chape coopérant avec l'articulation supérieure ou l'articulation inférieure. La chape présente au moins une plaque 36, 51 plane traversée par une broche 42, 62 de l'articulation concernée. Eventuellement, cette plaque 36, 51 est parallèle à une droite P4 contenant le centre d'articulation inférieure 63 et le centre d'articulation supérieure 43.

Dès lors, le procédé selon l'invention propose une étape de décalage en azimut de l'articulation supérieure 40 autour de l'axe de rotation AX par rapport à l'articulation inférieure 60 pour une servocommande inclinée 70.

Eventuellement, le rotor 1 peut posséder une servocommande positionnée avant l'application du procédé dans une position médiane POSM où l'articulation inférieure n'est pas décalée en azimut autour de l'axe de rotation par rapport à l'articulation supérieure. Dès lors, ladite étape de décalage en azimut peut comporter une sous-étape de décalage en azimut selon ledit sens de rotation ROT de l'articulation supérieure 40 par rapport à ladite position médiane POSM, et /ou une sous-étape de décalage en azimut selon un sens ROT3 opposé audit sens de rotation ROT par rapport à ladite position médiane POSM.

Par ailleurs, toutes les servocommandes ont un centre d'articulation inférieure 63 séparé radialement de l'axe de rotation AX par un rayon inférieur RINF, et un centre d'articulation supérieure 43 séparé radialement de l'axe de rotation AX par un rayon supérieur RSUP. La figure 3 illustre une servocommande ayant un rayon inférieur RINF égale au rayon supérieur RSUP. Néanmoins, que la servocommande soit une servocommande inclinée ou non inclinée, le rayon inférieur RINF et le rayon supérieur RSUP de cette servocommande peuvent être différents. Notamment, le rayon supérieur RSUP peut être supérieur au rayon inférieur RINF.

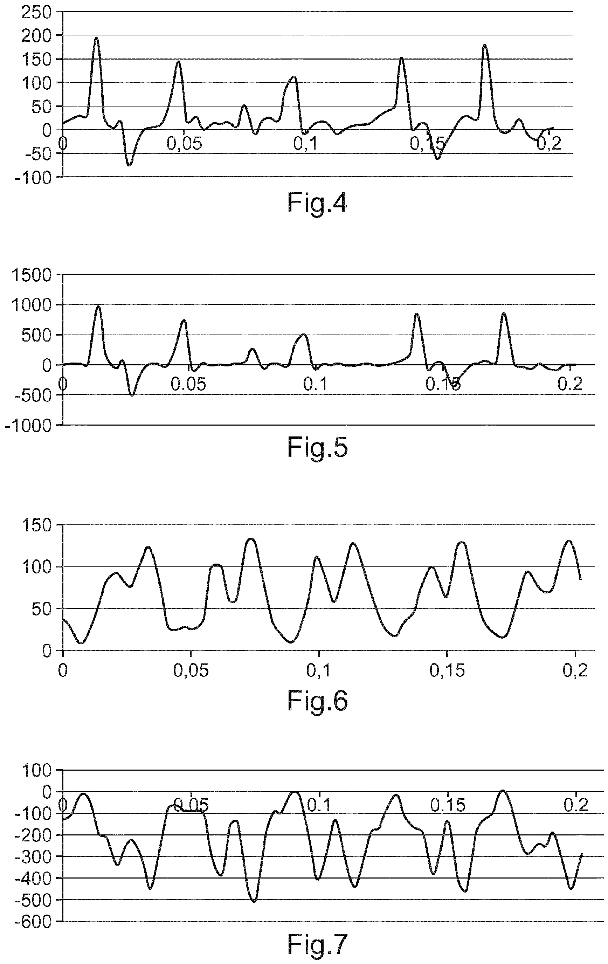

Les figures 4 à 7 illustrent les résultats avantageux de l'invention.

Les figures 4 et 5 illustrent au cours d'un tour rotor, respectivement le couple induit par les servocommandes sur un compas inférieur et les efforts exercés sur le compas inférieur dans un rotor pourvu de servocommandes non inclinées.

La figure 4 présente en particulier le couple induit sur le compas inférieur par les servocommandes, sur un aéronef dépourvu de servocommandes inclinées. La figure 4 prend la forme d'un diagramme présentant ledit couple en ordonnée en fonction du temps présent en abscisse.

Le couple induit par les servocommandes varie de 200 Nm à - 50 Nm avec changement de signe, ce qui induit des chocs dans le compas inférieur.

La figure 5 présente dès lors les efforts subis par le compas inférieur, sur un aéronef dépourvu de servocommandes inclinées. La figure 5 prend la forme d'un diagramme présentant lesdits efforts en ordonnée en fonction du temps présent en abscisse.

Les efforts subis varient sur une plage importante allant de - 500 N à 1000 N, soit des efforts de l'ordre de 250N +/- 750 N.

Les figures 6 et 7 illustrent au cours d'un tour rotor respectivement le couple induit par les servocommandes sur un compas inférieur et les efforts exercés sur le compas inférieur dans un rotor pourvu d'au moins une servocommande inclinée.

La figure 6 présente en particulier le couple induit sur le compas inférieur par les servocommandes, sur un aéronef selon l'invention. La figure 6 prend la forme d'un diagramme présentant ledit couple en ordonnée en fonction du temps présent en abscisse.

Le couple induit par les servocommandes varie désormais de 5 Nm à 120 Nm sans changement de signe, ce qui n'induit pas des chocs dans le compas inférieur. De plus, la plage de variation de couple est nettement plus faible que la plage atteinte en l'absence de l'invention et observé sur la figure 4.

La figure 7 présente dès lors les efforts subis par le compas inférieur, sur un aéronef selon l'invention. La figure 7 prend la forme d'un diagramme présentant lesdits efforts en ordonnée en fonction du temps présent en abscisse.

Les efforts subis varient sur une plage restreinte allant de - 500 N à -10N, soit des efforts de l'ordre de 245N +/- 255 N. Le compas inférieur subit alors des efforts dynamiques qui sont sensiblement égaux au tiers des efforts dynamiques subis en l'absence de l'invention

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (100) comprenant un rotor (1), ledit rotor (1) étant muni d'un ensemble de plateaux cycliques (10) et de pales (4), l'ensemble de plateaux cycliques (10) comprenant un plateau tournant (11) relié auxdites pales (4) par des bielles de pas (6), l'ensemble de plateaux cycliques (10) comprenant un plateau non tournant (12), ledit plateau tournant (11) étant mobile en rotation autour d'un axe de rotation (AX) du rotor (1), un compas inférieur (8) étant articulé au plateau non tournant (12) et étant articulé à un organe (99) immobile en rotation autour de l'axe de rotation (AX), ledit rotor (1) comprenant une pluralité de servocommandes (5), chaque servocommande (5) étant munie d'une articulation supérieure (40) articulée à une attache supérieure (35) du plateau non tournant (12) et d'une articulation inférieure (60) articulée à une attache inférieure (50) immobile dans un référentiel de l'aéronef (100),
**caractérisé en ce que** pour au moins une dite servocommande dénommée « servocommande inclinée (70) », ladite articulation inférieure (60) est décalée en azimut autour de l'axe de rotation (AX) par rapport à ladite articulation supérieure (40).

2. Aéronef selon la revendication 1,
**caractérisé en ce que** pour au moins une dite servocommande inclinée (70), un centre d'articulation inférieure (63) de l'articulation inférieure (60) est décalé en azimut par rapport à un centre d'articulation supérieure (43) de l'articulation supérieure (40).

3. Aéronef selon la revendication 2,
**caractérisé en ce que** pour au moins une dite servocommande inclinée (70), un plan de référence (P1) contenant ledit axe de rotation (AX) et ledit centre d'articulation inférieure (63) de l'articulation inférieure (60), un plan supérieur (P3) étant orthogonal audit axe de rotation (AX) et contenant ledit centre d'articulation supérieure (43) de l'articulation supérieure (40), un angle supérieur non nul (90) sépare circonférentiellement et autour de l'axe de rotation (AX) dans le plan supérieur (P3) le centre d'articulation supérieure (40) et le plan de référence (P1).

4. Aéronef selon la revendication 3,
**caractérisé en ce que**, ledit rotor (1) effectuant un mouvement rotatif selon un sens de rotation (ROT) autour de l'axe de rotation (AX), ledit centre d'articulation supérieure (43) s'éloigne dudit plan de référence (P1) selon ledit sens de rotation (ROT).

5. Aéronef selon l'une quelconque des revendications 1 à 4,
**caractérisé en ce que** ledit rotor (1) comprenant au moins trois servocommandes (5), lesdits trois servocommandes comprenant une servocommande latérale gauche (501) tendant à faire basculer ledit ensemble de plateaux cycliques (10) vers un flanc gauche dudit aéronef (100), lesdits trois servocommandes comprenant une servocommande latérale droite tendant à faire basculer ledit ensemble de plateaux cycliques (10) vers un flanc droit dudit aéronef (100), lesdits trois servocommandes comprenant une servocommande avant (502) tendant à faire basculer ledit ensemble de plateaux cycliques (10) vers une extrémité avant (AV) dudit aéronef (100), au moins ladite servocommande avant (502) est une dite servocommande inclinée (70), chaque servocommande (75) qui n'est pas une servocommande inclinée ayant une articulation inférieure qui n'est pas décalée en azimut par rapport à une articulation supérieure de cette servocommande.

6. Aéronef selon la revendication 3,
**caractérisé en ce qu'**au moins une dite attache inférieure (50) ou une dite attache supérieure (35) d'une dite servocommande inclinée (70) comprend une chape, ladite chape présentant au moins une plaque (36, 51) plane traversée par une broche (42, 62), ladite plaque (36, 51) plane est parallèle à une droite (P4) contenant ledit centre d'articulation inférieure (63) et ledit centre d'articulation supérieure (43).

7. Procédé d'optimisation d'un aéronef (100) ayant une voilure tournante munie d'un rotor (1), ledit rotor (1) étant muni d'un ensemble de plateaux cycliques (10) et de pales (4), l'ensemble de plateaux cycliques (10) comprenant un plateau tournant (11) relié auxdites pales (4) par des bielles de pas (6), l'ensemble de plateaux cycliques (10) comprenant un plateau non tournant (12), ledit plateau tournant (11) étant mobile en rotation autour d'un axe de rotation (AX) du rotor (1), un compas inférieur (8) étant articulé au plateau non tournant (12) et étant articulé à un organe (99) immobile en rotation autour de l'axe de rotation (AX), ledit rotor (1) comprenant une pluralité de servocommandes (5), chaque servocommande (5) étant munie d'une articulation supérieure (40) articulée à une attache supérieure (35) du plateau non tournant (12) et d'une articulation inférieure (60) articulée à une attache inférieure (50) immobile dans un référentiel de l'aéronef (100),
**caractérisé en ce que** pour au moins une dite servocommande dite « servocommande inclinée (70) », ledit procédé comporte une étape de :
- décalage en azimut de ladite articulation supérieure (40) autour de l'axe de rotation (AX) par rapport à ladite articulation inférieure (60).

8. Procédé selon la revendication 7,
**caractérisé en ce que**, ledit rotor (1) effectuant un mouvement rotatif selon un sens de rotation (ROT) autour de l'axe de rotation (AX), ledit rotor (1) possédant une servocommande positionnée avant l'application du procédé dans une position médiane (POSM) où ladite articulation inférieure n'est pas décalée en azimut autour de l'axe de rotation par rapport à ladite articulation supérieure, ladite étape de décalage en azimut comporte une sous-étape de décalage en azimut selon ledit sens de rotation (ROT) de l'articulation supérieure (40) par rapport à ladite position médiane (POSM).

9. Procédé selon l'une quelconque des revendications 7 à 8,
**caractérisé en ce que**, ledit rotor (1) effectuant un mouvement rotatif selon un sens de rotation (ROT) autour de l'axe de rotation (AX), ledit rotor (1) possédant une servocommande positionnée avant l'application du procédé dans une position médiane (POSM) où ladite articulation inférieure n'est pas décalée en azimut autour de l'axe de rotation par rapport à ladite articulation supérieure, ladite étape de décalage en azimut comporte une sous-étape de décalage en azimut selon un sens (ROT3) opposé audit sens de rotation (ROT) de l'articulation inférieure (60) par rapport à ladite position médiane (POSM).

## Patentansprüche

1. Luftfahrzeug (100) mit einem Rotor (1), wobei der Rotor (1) mit einer Anordnung von Taumelscheiben (10) und Schaufeln (4) versehen ist, wobei der Satz von Taumelscheiben (10) eine rotierende Scheibe (11) umfasst, die mit den Schaufeln (4) über Neigungsstangen (6) verbunden ist, die Anordnung der Taumelscheiben (10) eine nicht rotierende Scheibe (12) umfasst, wobei die rotierende Scheibe (11) um eine Drehachse (AX) des Rotors (1) drehbar ist, wobei ein unterer Mitnehmer an die nicht rotierende Scheibe (12) angelenkt ist und an ein um die Drehachse (AX) drehfestes Element (99) angelenkt ist, wobei der Rotor (1) eine Mehrzahl von Servosteuerungen (5) umfasst, wobei jede Servosteuerung (5) mit einem oberen Gelenk (40), das an einer oberen Befestigung (35) der nicht drehenden Scheibe (12) angelenkt ist, und einem unteren Gelenk (60), das an einer in einem Bezugssystem (100) des Luftfahrzeugs stationären unteren Befestigung (50) angelenkt ist, versehen ist,
**dadurch gekennzeichnet, dass** bei mindestens einer der Servosteuerungen, als "schräge Servosteuerung (70)" bezeichnet, das untere Gelenk (60) um die Drehachse (AX) in Bezug auf das obere Gelenk (40) azimutal versetzt ist.

2. Luftfahrzeug nach Anspruch 1, **dadurch gekennzeichnet, dass** bei mindestens einer der schrägen Servosteuerungen (70) eine untere Gelenkmitte (63) des unteren Gelenks (60) in Bezug auf eine obere Gelenkmitte (43) des oberen Gelenks (40) azimutal versetzt ist.

3. Luftfahrzeug nach Anspruch 2, **dadurch gekennzeichnet, dass** bei mindestens einer der schrägen Servosteuerungen (70) eine Bezugsebene (P1) die Drehachse (AX) und die untere Gelenkmitte (63) des unteren Gelenks (60) enthält, eine obere Ebene (P3) orthogonal zur Drehachse (AX) ist und die obere Gelenkmitte (43) des oberen Gelenks (40) enthält, und dass ein nicht verschwindender oberer Winkel (90) in der oberen Ebene (P3) die obere Gelenkmitte (40) und die Bezugsebene (P1) in Umfangsrichtung und um die Drehachse (AX) trennt.

4. Luftfahrzeug nach Anspruch 3, **dadurch gekennzeichnet, dass** wenn der Rotor (1) eine Drehbewegung in einer Drehrichtung (ROT) um die Drehachse (AX) ausführt, sich die obere Gelenkmitte (43) von der Bezugsebene (P1) in der Drehrichtung (ROT) entfernt.

5. Luftfahrzeug nach einem der Ansprüche 1 bis 4, **dadurch gekennzeichnet, dass** der Rotor (1) mindestens drei Servosteuerungen (5) umfasst, wobei die drei Servosteuerungen eine linksseitige Servosteuerung (501) umfassen, die dazu neigt, die Taumelscheibenanordnung (10) in Richtung einer linken Flanke des Luftfahrzeugs (100) zu neigen, wobei die drei Servosteuerungen eine rechtsseitige Servosteuerung umfassen, die dazu neigt, die Taumelscheibenanordnung (10) in Richtung einer rechten Flanke des Flugzeugs (100) zu neigen, wobei die drei Servosteuerungen eine vordere Servosteuerung (502) umfassen, die dazu neigt, die Taumelscheibenanordnung (10) in Richtung eines vorderen Endes (AV) des Flugzeugs (100) zu neigen, wobei mindestens die vordere Servosteuerung (502) eine schräge Servosteuerung (70) ist, wobei jede Servosteuerung (75), die keine schräge Servosteuerung ist, ein unteres Gelenk hat, das nicht in Bezug auf ein oberes Gelenk dieser Servosteuerung azimutal versetzt ist.

6. Luftfahrzeug nach Anspruch 3,
**dadurch gekennzeichnet, dass** von unterer Befestigung (50) und oberer Befestigung (35) einer schrägen Servosteuerung (70) wenigstens eine einen Gabelkopf umfasst, wobei der Gabelkopf mindestens eine ebene Platte (36, 51) aufweist, durch die ein Bolzen (42, 62) hindurchgeht, und
die ebene Platte (36, 51) parallel zu einer Geraden (P4) ist, die die untere Gelenkmitte (63) und die obere Gelenkmitte (43) enthält.

7. Verfahren zur Optimierung eines Luftfahrzeugs (100) mit Drehflügel, das einen Rotor (1) aufweist, wobei der Rotor (1) mit einer Anordnung von Taumelscheiben (10) und Schaufeln (4) versehen ist, wobei der Satz von Taumelscheiben (10) eine rotierende Scheibe (11) umfasst, die mit den Schaufeln (4) über Neigungsstangen (6) verbunden ist, die Anordnung der Taumelscheiben (10) eine nicht rotierende Scheibe (12) umfasst, wobei die rotierende Scheibe (11) um eine Drehachse (AX) des Rotors (1) drehbar ist, wobei ein unterer Mitnehmer an die nicht rotierende Scheibe (12) angelenkt ist und an ein um die Drehachse (AX) drehfestes Element (99) angelenkt ist, wobei der Rotor (1) eine Mehrzahl von Servosteuerungen (5) umfasst, wobei jede Servosteuerung (5) mit einem oberen Gelenk (40), das an einer oberen Befestigung (35) der nicht drehenden Platte (12) angelenkt ist, und einem unteren Gelenk (60), das an einer in einem Bezugssystem (100) des Luftfahrzeugs stationären unteren Befestigung (50) angelenkt ist, versehen ist,
**dadurch gekennzeichnet, dass** für mindestens eine der Servosteuerungen, als "schräge Servosteuerung (70)" bezeichnet, das Verfahren einen Schritt des Versetzens in Azimutrichtung des unteren Gelenks (60) um die Drehachse (AX) in Bezug auf das obere Gelenk (40) umfasst.

8. Verfahren nach Anspruch 7, **dadurch gekennzeichnet, dass** der Rotor (1) eine Drehbewegung in einer Drehrichtung (ROT) um die Drehachse (AX) macht, dass der Rotor (1) einen Servoantrieb aufweist, der vor der Anwendung des Verfahrens in einer mittleren Position (POSM) positioniert ist, in der das untere Gelenk nicht azimutal um die Drehachse in Bezug auf das obere Gelenk versetzt ist, und dass der Schritt des azimutalen Versetzens einen Teilschritt des azimutalen Versetzens des oberen Gelenks (40) in Bezug auf die mittlere Position (POSM) in der Drehrichtung (ROT) beinhaltet.

9. Verfahren nach Anspruch 7 oder 8, **dadurch gekennzeichnet, dass** der Rotor (1) eine Drehbewegung in einer Drehrichtung (ROT) um die Drehachse (AX) macht, dass der Rotor (1) einen Servoantrieb aufweist, der vor der Anwendung des Verfahrens in einer mittleren Position (POSM) positioniert ist, in der das untere Gelenk nicht azimutal um die Drehachse in Bezug auf das obere Gelenk versetzt ist, und dass der Schritt des azimutalen Versetzens einen Teilschritt des azimutalen Versetzens des unteren Gelenks (60) in Bezug auf die mittlere Position (POSM) in einer Richtung (ROT3) beinhaltet, die der Drehrichtung (ROT) entgegengesetzt ist.

## Claims

1. Aircraft (100) comprising a rotor (1), said rotor (1) being provided with an assembly of cyclic plates (10) and blades (4), the assembly of cyclic plates (10) comprising a rotating plate (11) connected to said blades (4) by step rods (6), the assembly of cyclic plates (10) comprising a non-rotating plate (12), said rotating plate (11) being mobile in rotation around an axis of rotation (AX) of the rotor (1), a lower compass (8) being hinged to the non-rotating plate (12) and being hinged to a member (99), immobile in rotation around the axis of rotation (AX), said rotor (1) comprising a plurality of servos (5), each servo (5) being provided with an upper hinge (40) hinged to an upper fastening (35) of the non-rotating plate (12) and with a lower hinge (60) hinged to a lower fastening (50), immobile in a reference point of the aircraft (100), **characterised in that** for at least one said servo referred to as "tilted servo (70)", said lower hinge (60) is azimuthally offset around the axis of rotation (AX) with respect to said upper hinge (40).

2. Aircraft according to claim 1,
**characterised in that** for at least one said tilted servo (70), a lower hinge centre (63) of the lower hinge (60) is azimuthally offset with respect to an upper hinge centre (43) of the upper hinge (40).

3. Aircraft according to claim 2,
**characterised in that** for at least one said tilted servo (70), a reference plane (P1) containing said axis of rotation (AX) and said lower hinge centre (63) of the lower hinge (60), an upper plane (P3) being orthogonal to said axis of rotation (AX) and containing said upper hinge centre (43) of the upper hinge (40), a non-zero upper angle (90) separates circumferentially and around the axis of rotation (AX) in the upper plane (P3), the upper hinge centre (40) and the reference plane (P1).

4. Aircraft according to claim 3,
**characterised in that**, said rotor (1) making a rotating movement according to a direction of rotation (ROT) around the axis of rotation (AX), said upper hinge centre (43) extends from said reference plane (P1) along said direction of rotation (ROT).

5. Aircraft according to any one of claims 1 to 4,
**characterised in that** said rotor (1) comprising at least three servos (5), said three servos comprising a left side servo (501) extending to make said assembly of cyclic plates (10) tilt towards a left flank of said aircraft (100), said three servos comprising a left side servo extending to make said assembly of cyclic plates (10) tilt towards a right flank of said aircraft (100), said three servos comprising a front servo (502) extending to make said assembly of cyclic plates (10) tilt towards a front end (AV) of said aircraft (100), at least said front servo (502) is a said tilted servo (70), each servo (75) which is not a tilted servo with a lower hinge which is not azimuthally offset with respect to an upper hinge of this servo.

6. Aircraft according to claim 3,
**characterised in that** at least one said lower fastening (50) or a said upper fastening (35) of a said tilted servo (70) comprises a subfloor, said subfloor having at least one flat plate (36, 51) passed through by a pin (42, 62), said flat plate (36, 51) is parallel to a straight line (P4) containing said lower hinge centre (63) and said upper hinge centre (43).

7. Method for optimising an aircraft (100) having a rotating wing provided with a rotor (1), said rotor (1) being provided with an assembly of cyclic plates (10) and blades (4), the assembly of cyclic plates (10) comprising a rotating plate (11) connected to said blades (4) by step rods (6), the assembly of cyclic plates (10) comprising a non-rotating plate (12), said rotating plate (11) being mobile in rotation around an axis of rotation (AX) of the rotor (1), a lower compass (8) being hinged to the non-rotating plate (12) and being hinged to a member (99), immobile in rotation around the axis of rotation (AX), said rotor (1) comprising a plurality of servos (5), each servo (5) being provided with an upper hinge (40) hinged to an upper fastening (35) of the non-rotating plate (12) and a lower hinge (60) hinged to a lower fastening (50), immobile in a reference point of the aircraft (100), **characterised in that** for at least one said servo, said "tilted servo (70)", said method comprises a step of:
- azimuthally offsetting said upper hinge (40) around the axis of rotation (AX) with respect to said lower hinge (60).

8. Method according to claim 7,
**characterised in that**, said rotor (1) making a rotating movement along a direction of rotation (ROT) around the axis of rotation (AX), said rotor (1) having a servo positioned before the application of the method in a median position (POSM) where said lower hinge is not azimuthally offset around the axis of rotation with respect to said upper hinge, said azimuthally offset step comprises an azimuthally offset sub-step along said direction of rotation (ROT) of the upper hinge (40) with respect to said median position (POSM).

9. Method according to any one of claims 7 to 8,
**characterised in that**, said rotor (1) making a rotating movement along a direction of rotation (ROT) around the axis of rotation (AX), said rotor (1) having a servo positioned before the application of the method in a median position (POSM) where said lower hinge is not azimuthally offset around the axis of rotation with respect to said upper hinge, said azimuthally offset step comprises an azimuthally offset sub-step along a direction (ROT3) opposite said direction of rotation (ROT) of the lower hinge (60) with respect to said median position (POSM).
